# EUROPEAN PATENT APPLICATION

(11) **EP 0 559 273 A2**
(43) Date of publication of application: **08.09.1993**
(21) Application number: 93200532.5
(22) Date of filing: 25.02.1993
(51) Int. Cl.: G11B 33/04

(54) **Package for a disc-shaped record carrier having a centre hole**

(30) Priority: 02.03.1992 EP 92200584
(71) Applicant: Philips Electronics N.V., 5621 BA Eindhoven (NL)
(72) Inventor: Doodson, Peter John, c/o INT. OCTROOIBUREAU B.V., NL-5656 AA Eindhoven (NL)
(74) Representative: Schrijnemaekers, Hubert Joannes Maria

(57) **Abstract**

A package contains a disc (1) having a centre hole (2) and comprises a bottom section (3) having a bottom (4) and transverse walls (5-8) and accommodating a disc holder (9) provided with central holding means (10) which cooperate elastically with the wall of the centre hole of the disc. A cover (11) is pivotally connected to the bottom section and extends parallel to the bottom over the disc and over the larger part of the disc holder but exposes for a smaller part a non-covered portion (12) of the disc holder adjacent a first transverse wall (5). The cover (11) is connected to a second transverse wall (6) of the bottom section (3), which second transverse wall adjoins the first transverse wall (5).

## Description

The invention relates to a package for a disc having a centre hole, which package comprises a bottom section having a bottom and transverse walls with a disc-holder arranged in the bottom section as a separate part, which holder comprises central elastic holding means for cooperation with the wall of the centre hole of the disc, and with a cover which is pivotally connected to the bottom section and which in the closed position extends parallel to the bottom over the disc and over the larger part of the disc holder and for a smaller part exposes a non-covered portion of the disc holder adjacent a first transverse wall of the bottom section.

A package of this type is known from European Patent Specification 0,086,484 B1 (herewith incorporated by reference) and has found widespread use as a package for -called Compact Discs. The principal advantage of the known package is that it not only provides excellent protection for the disc but also constitutes a standard package. By means of printed insert sheets it is possible to give the package an appearance in agreement with the music on the disc in the package. Thus, the cost price of the package can remain low by mass production.

The cover of the known package has two continuous side-wall portions whose free ends are hinged to the bottom section at opposite sides of the non-covered portion of the disc holder. The side of the cover which faces the bottom section is therefore fork-shaped in order to leave the non-covered portion of the disc holder free when the cover is closed. However, owing to the fork shape of the cover the hinge connection between the cover and the bottom section is comparatively sensitive to shocks, so that the cover can readily come off the bottom section. This is because the free ends of the continuous side walls of the cover can easily bend, so that the cover becomes detached from the bottom section.

It is an object of the invention among others to provide a package having a more tugged hinge construction. It is another object of the invention to provide a package which is clearly distinct from the prior-art package and, while the effective protection of the disc is maintained, is eminently suited as a package for other types of disc, such as the so-called Compact Disc Interactive, Compact Disc Read Only Memory, Photo Compact Disc or Compact Disc Movie.

To this end the package in accordance with the invention is characterised in that the cover is connected to a second transverse wall of the bottom section, which second transverse wall adjoins the first transverse wall.

The principal advantage of the invention is that a much more tugged hinge construction is possible because it is not necessary to make the cover fork-shaped at the hinge side. A further advantage is that the non-covered portion of the disc holder together with the corresponding part of the bottom section in fact form a handle to hold the package while the cover is opened. With the prior-art package this is not possible because the cover is pivoted to the very side where the non-covered portion is situated.

An advantageous embodiment of the invention is characterised in that the cover and the bottom section comprise elastically interengageable closing portions on a free side which is remote from the second transverse wall and on a third transverse wall of the bottom section respectively, which third transverse wall faces the second transverse wall. At said side of the cover and the third transverse wall there is ample room for the elastic portions. When the package is opened the package can be held in the hand in such a way that the cover can be gripped and opened with the thumb directly at the closing portions.

A further embodiment of the invention is characterised in that the cover and the bottom section are pivotally connected to one another by an integral hinge. This construction, which can hardly or not be realised with the known package, results in a very robust overall structure of the package in accordance with the invention. This is because substantially the entire length of the third transverse wall, which adjoins the non-covered portion of the disc holder, is available for the hinge construction. When an integral hinge is used it will be advantageous if the unit comprising the bottom section and the cover is injection-moulded as a single integrated unit from a plastics suitable for integral hinges, such as polypropylene. Such plastics are advantageous for environmental reasons because they are decomposable without any harmful substances being released.

A further embodiment of the invention is characterised in that the non-covered part of the disc holder is constructed in a manner characteristic of the nature of a disc to be packed. In this way the package in accordance with the invention can be characterised distinctly for use with discs in accordance with various standards, such as the afore-mentioned CD-I, CD-Video and CD-ROM discs. Characterisation is possible, for example, by the use of different colours, a different styling or by the use of characteristic texts or letter combinations. The disc holders provided with the disc may already serve to identify the disc during production, even before the disc holder is placed in the bottom section.

A further embodiment of the invention is characterised in that the package has been provided with a printed insert sheet situated between the bottom section and the disc holder and extending along the bottom, the first transverse wall and a fourth transverse wall facing said first transverse wall. This embodiment continues with the insert sheets known from the prior-art package and enables the insert sheet and a text on this sheet to be viewed through the first transverse wall. Since with the package in accordance with the invention it is generally the first transverse wall which is visible when the package is displayed for sale this is important for a quick recognition of the nature of the disc in the package.

A further embodiment of the invention is characterised in that the disc holder is connected to the bottom section by snap portions at the location of the first transverse wall and the fourth transverse wall. These transverse walls are not situated near the hinge or the closing portions and are therefore eminently suited for attaching the disc holder. Said insert sheet may be provided with the appropriate recesses or cut-outs at the location of the snap portions.

Yet another embodiment of the invention is characterised in that the cover has been provided with a second disc holder accommodated therein. This renders the package suitable for two discs at a time.

The invention will now be described in more detail, merely by way of illustration, with reference to the drawings, which relate to a possible embodiment to which the invention is not limited and in which:
Fig. 1 is a perspective view of a horizontally disposed open package and a disc to be placed therein, and a perspective view at the rear of a vertically disposed package,

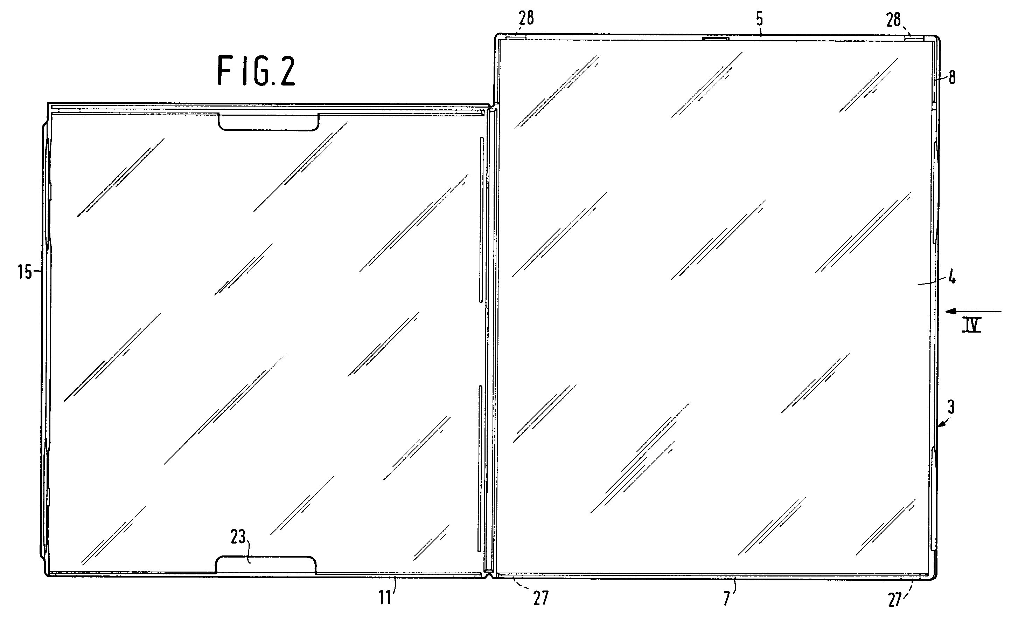

Fig. 2 is a plan view of a bottom section and a cover in the open position,

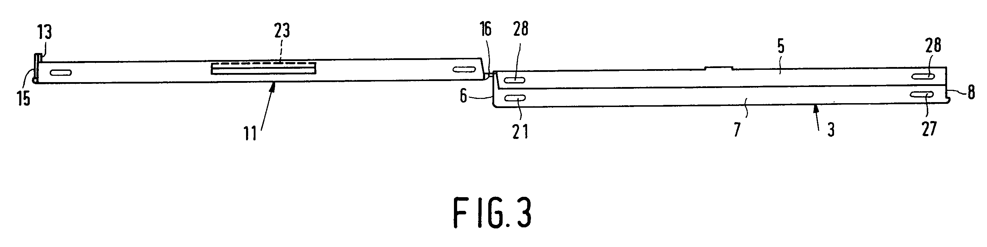

Fig. 3 is a sectional view of the bottom section and the cover shown in Fig. 2,

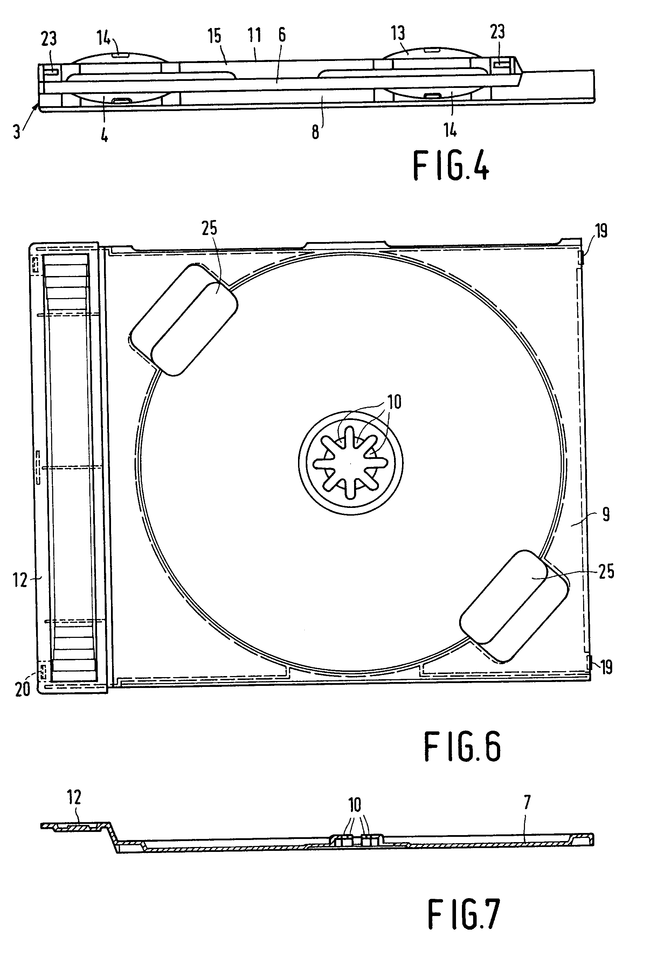

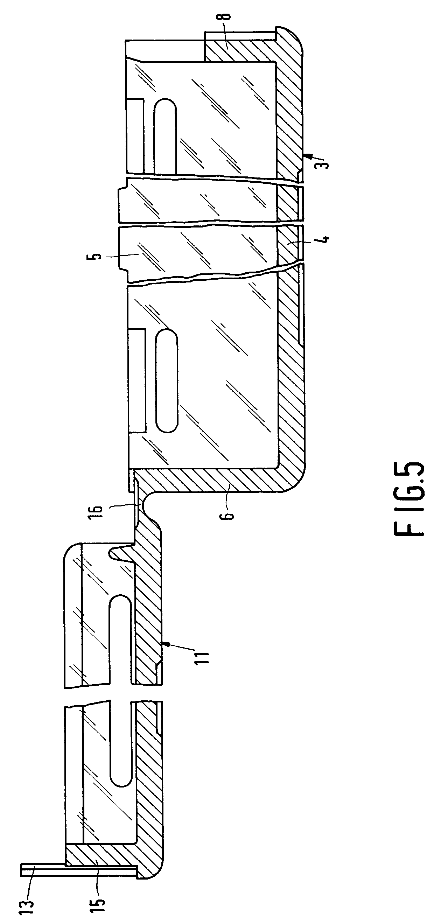

Fig. 4 is a side view taken as indicated by the arrow IV in Fig. 3,
Fig. 5 is an enlarged-scale cross-sectional view at the location of the integral hinge of the package shown in Fig. 2,
Fig. 6 is a plan view of a disc holder for a package as shown in Fig. 1,
Fig. 7 is a cross-sectional view of the disc holder shown in Fig. 6,

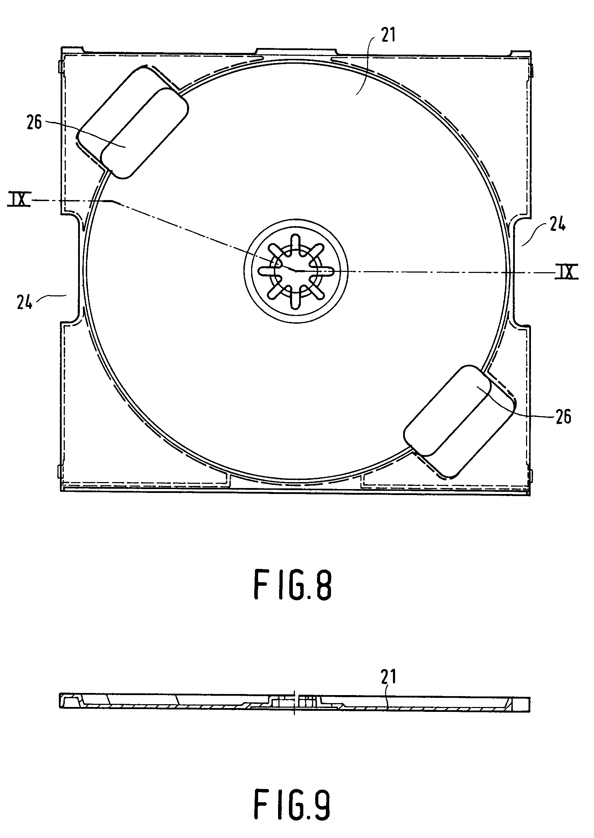

Fig. 8 is a plan view of a second disc holder to be arranged in the cover of a package as shown in Fig. 1,and
Fig. 9 is a cross-sectional view of the second disc holder shown in Fig. 8.

The package shown in the drawings serves for a disc 1 having a centre hole 2. The package comprises a bottom section 3 with a bottom 4 and transverse walls 5-8. The bottom section 4 accommodates a disc holder 9 in the form of a separate part, which disc holder comprises central elastic holding means 10 for cooperation with the wall of the centre hole 2 of the disc 1. In the closed position (not shown) a cover 11, which is hinged to the bottom section 4, extends parallel to the bottom 4 over the disc 1 and over the larger part of the disc holder 9 and for a smaller part it exposes a portion 12 of the disc holder adjacent the first transverse wall 5 of the bottom section 4. The cover 11 is connected to the second transverse wall 6 of the bottom section 4, which wall adjoins the first transverse wall 5.

The cover 11 and the bottom section 4 are provided with elastically interengageable closing portions 13-14 on a free side 15 which is remote from the second transverse wall 6 and on a third transverse wall 8 of the bottom section, which third transverse wall faces the second transverse wall 6.

The cover 11 and the bottom section 4 are pivotally connected to one another by an integral hinge 16.

The non-covered portion 12 of the disc holder 9 has a indication 17 specifying the nature of a disc in the package. In this case the indication is already formed in relief in the plastics during injection-moulding.

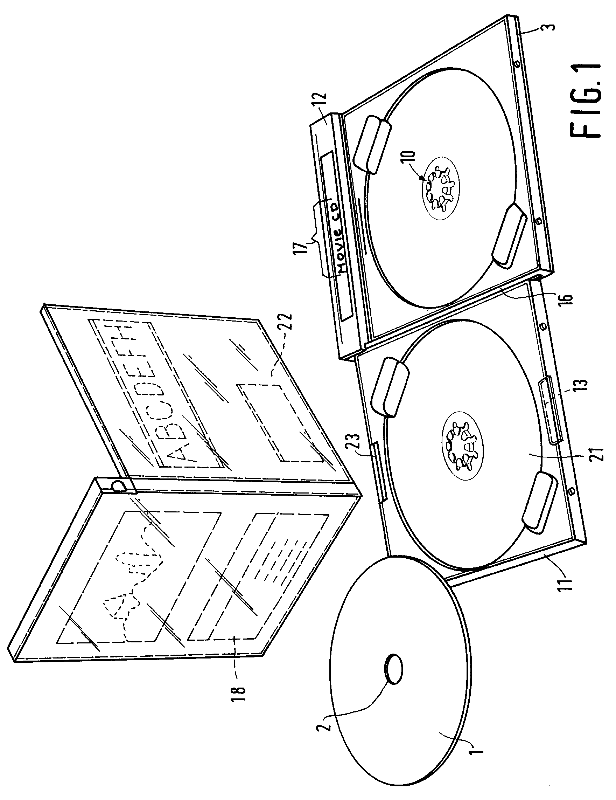

The package has been provided with a printed insert sheet 18 (see Fig. 1 where the insert sheet is visible through the transparent bottom 3 of the upright package), which is situated between the bottom section 3 and the disc holder 9 and extends along the bottom 4 and the first transverse wall 5 and the facing fourth transverse wall 7.

The disc holder 9 is connected to the bottom section 3 by snap portions 19-20 at the location of the first and the fourth transverse wall. These snap portions snap into openings 27-28 in the bottom section 3.

The cover 11 accommodates a second disc holder 21. Underneath this disc holder an insert sheet 22 is situated, see the upright package in Fig. 1. It is alternatively possible not to provide the cover 11 with a second disc holder. When the package is used for only one disc the second disc holder is redundant and the available space may be used for enclosing a leaflet or the like. As a standard the cover therefore has two ribs 23 underneath which a leaflet can be inserted. Obviously, the second disc holder has corresponding recesses 24. Moreover, ribs 29 have been provided to retain a leaflet in the lateral direction.

Both disc holders 9 and 21 have openings 25-26 to facilitate removal of a disc from the package.

Although in the foregoing the invention has been described with reference to the drawings, it is to be noted that the invention is not limited to the embodiments shown in the drawings. The invention also extends to all embodiments which deviate from those shown in the drawings but within the scope defined in the Claims and which utilise the basic idea of the invention, which entails that the package has a cover smaller than the bottom section so that part of the disc holder remains exposed and the cover is pivotally connected to the bottom section at a side wall.

For example, in departure from what is shown in the drawings, the hinge need not be constructed as an integral hinge. The non-covered portion of the disc holder can be printed with text and/or artwork or may be provided with a sticker.

Further advantages of the invention, which have not yet been mentioned hereinbefore, may be obtained depending on the embodiment used and the field of use. Further advantages may also become apparent upon comparison of the invention with prior art other than cited.

## Claims

1. A package for a disc (1) having a centre hole (2), which package comprises a bottom section (3) having a bottom (4) and transverse walls (5-8) with a disc-holder (9) arranged in the bottom section as a separate part, which holder comprises central elastic holding means (14) for cooperation with the wall of the centre hole of the disc, and with a cover (11) which is pivotally connected to the bottom section and which in the closed position extends parallel to the bottom over the disc and over the larger part of the disc holder and for a smaller part exposes a non-covered portion (12) of the disc holder adjacent a first transverse wall of the bottom section, characterised in that the cover (11) is connected to a second transverse wall (6) of the bottom section (3), which second transverse wall adjoins the first transverse wall (5).

2. A package as claimed in Claim 1, characterised in that the cover (11) and the bottom section (3) comprise elastically interengageable closing portions (13-14) on a free side (15) which is remote from the second transverse wall (6) and on a third transverse wall (8) of the bottom section respectively, which third transverse wall faces the second transverse wall.

3. A package as claimed in Claim 1, characterised in that the cover (11) and the bottom section (3) are pivotally connected to one another by an integral hinge (16).

4. A package as claimed in Claim 1, characterised in that the non-covered part (12) of the disc holder (9) is constructed in a manner characteristic of the nature of a disc (1) to be packed.

5. A package as claimed in Claim 1, characterised in that the package has been provided with a printed insert sheet (22) situated between the bottom section (3) and the disc holder (9) and extending along the bottom (4), the first transverse wall (5) and a fourth transverse wall (7) facing said first transverse wall.

6. A package as claimed in Claim 5, characterised in that the disc holder (9) is connected to the bottom section (3) by snap portions (19-20) at the location of the first transverse wall (5) and the fourth transverse wall (7).

7. A package as claimed in Claim 1, characterised in that the cover (11) has been provided with a second disc holder (21) accommodated therein.
